(19) **Europäisches Patentamt**
**European Patent Office**
**Office européen des brevets**

(11) **EP 1 757 904 B1**

(12) **EUROPEAN PATENT SPECIFICATION**

(45) Date of publication and mention
of the grant of the patent:
**28.11.2012 Bulletin 2012/48**

(51) Int Cl.:
**G01C 21/34** *(2006.01)*    **G08G 1/005** *(2006.01)*

(21) Application number: **04746143.9**

(22) Date of filing: **18.06.2004**

(86) International application number:
**PCT/JP2004/008641**

(87) International publication number:
**WO 2005/124280 (29.12.2005 Gazette 2005/52)**

(54) **COMMUNICATIVE NAVIGATION SYSTEM AND INFORMATION DISTRIBUTION SERVER, AND MOBILE NAVIGATION TERMINAL**

KOMMUNIKATIVES NAVIGATIONSSYSTEM UND INFORMATIONSVERTEILUNGSSERVER UND MOBIL-NAVIGATIONSENDGERÄT

SYSTÈME COMMUNIQUANT DE NAVIGATION ET SERVEUR DE DISTRIBUTION D'INFORMATION ET TERMINAL MOBILE DE NAVIGATION

(84) Designated Contracting States:
**DE FR GB**

(43) Date of publication of application:
**28.02.2007 Bulletin 2007/09**

(73) Proprietor: **Navitime Japan Co., Ltd.**
**Tokyo 101-0051 (JP)**

(72) Inventor: **KIKUCHI, Shin**
**NAVITIME JAPAN CO., LTD.**
**Tokyo 101-0051 (JP)**

(74) Representative: **HOFFMANN EITLE**
**Patent- und Rechtsanwälte**
**Arabellastrasse 4**
**81925 München (DE)**

(56) References cited:
**EP-A1- 1 069 547        EP-A2- 0 539 144**
**WO-A2-01/23835        JP-A- 5 113 343**
**JP-A- 2001 148 092        JP-A- 2001 165 681**
**JP-A- 2001 201 352        JP-A- 2001 298 765**
**JP-A- 2003 214 860        US-A1- 2003 045 997**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a communicative navigation system comprising a mobile navigation terminal such as a mobile phone and an information distribution server that distributes map information and route data, an information distribution server, and a mobile navigation terminal. In particular, the present invention relates to a communicative navigation system with a cartographic database and aerial or satellite photographic image data base provided in an information distribution server, wherein route searching is conducted based on cartographic data, and the searched routes are appended to the aerial photographic images and distributed to the mobile navigation terminals, and to an information distribution server, and a mobile navigation terminal.

BACKGROUND ART

In the past, to reach a certain destination in unfamiliar territory, people relied on road maps and landmarks while checking addresses. Moreover, in automobiles equipped with car navigation systems (hereinafter referred to as "On-board Navigation"), the user is provided with navigation information by inputting a target location, and receives guidance through display on a monitor screen or through audible output from the car navigation system. On-board navigation utilizes global positioning systems ("GPS") which receive GPS signals transmitted from a plurality of GPS satellites that circle the earth via GPS antenna, and identify a satellite position by analyzing satellite positions and time information and the like contained in the GPS signals. There must be at least four GPS satellites in such type of car navigation system. By itself, the GPS generally fixes a certain position with an accuracy of slightly over 10m, but such position-fixing accuracy can be enhanced by 5m or less if Differential GPS ("DGPS") is available.

In recent years, the performance of portable communication terminal devices such as PHS devices has dramatically improved, as they have become more and more multifunctional. In particular, along with reinforcing their telephone communication capability, the data communication function of such gadgets has expanded to various uses, such that multifarious data communication services are now accessible to users via the Internet. One such example is navigation service, by which not only automobile drivers but ambulatory users of mobile phones as well can access route guidance from their current position to a certain destination.

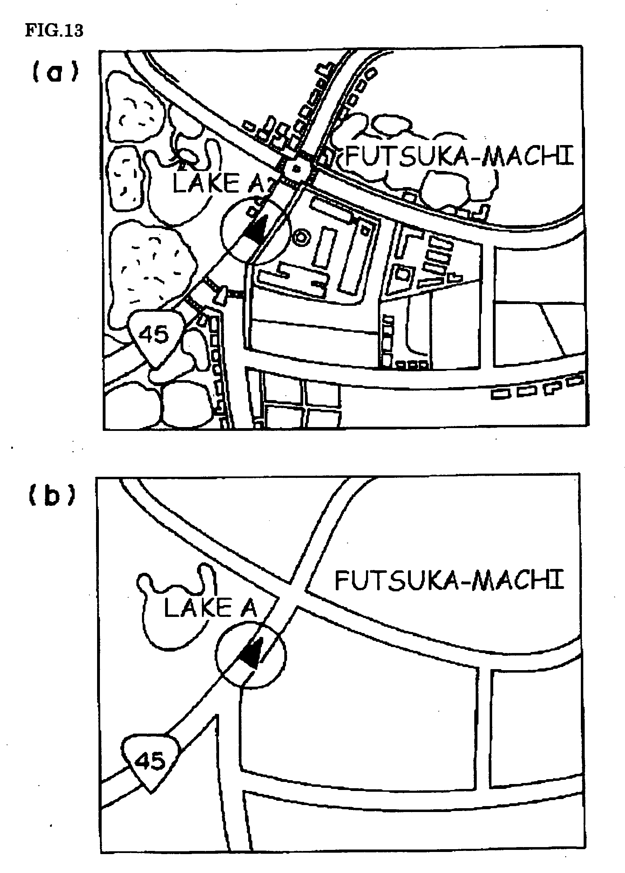

In conventional navigation systems disclosed, for example, in Japanese Laid-Open Patent Application No. 5-113343 (hereinafter, "Patent Document 1"), the current location of the navigation device is displayed on an aerial photograph. As shown in Fig. 13, this type of navigation system displays the current location on a map display screen (refer to Fig. 13A) based on cartographic data stored in advance and based on current location data obtained by self-positioning. This navigation system has storage means whereby aerial photographs are incorporated in advance as image data and stored as aerial photographic data, and display control means whereby current location is displayed on the aerial photograph display screen based on the cartographic data and current location data indexed to coordinates of the aerial photographic data that has been stored (refer to Fig. 13B).

Such navigation system offers the advantage of allowing the user to recognize the surroundings of the current location easily because the current location itself is shown on the aerial photograph.

In addition, communicative navigation systems that utilize a network have also been realized. For example, communicative navigation systems that operate via mobile phones and information distribution servers have been disclosed in Japanese Laid-Open Patent Application No. 2003-214860 (hereinafter, "Patent Document 2") and Japanese Laid-Open Patent Application No. 2001-298765 (hereinafter, "Patent Document 3"). The navigation system disclosed in Patent Document 2, as shown in Fig. 14, comprises a portable terminal (mobile phone) 1 that is connected to a mobile communications network 2 and a data communication service center (information distribution computer system) 3. The portable terminal 1 in turn is connected to the data communication service center 3, and receives the desired data communication service. When the portable terminal 1 is a PHS device or a mobile phone, communication is possible with the desired contact (e.g., fixed phone, mobile phone, PHS) through telephone wiring networks and mobile communication base stations via mobile communication network 2. The data communication service center 3 is configured in such manner that route navigation service is provided in accordance with requests from a mobile terminal 1 as described below.

Specifically, a route search request including position information regarding the starting location and target location is sent from the mobile terminal 1, and the information distribution computer system of the data communication service terminal 3 searches for the optimal route from the starting location to the target location using road data compiled in the storage means. The searched route data is temporarily stored as route guidance data in the storage means. When display map information that designates the positional coordinates and route guidance is requested by the mobile terminal 1, the information distribution computer system of the data communication service center 3 reads from the storage means the designated route guidance data and the cartographic data for displaying a vector-format map in the vicinity of the designated positional coordinates, and converts the route guidance data to vector data for drawing the route guide in a specific color. After being combined with the cartographic data, the information is sent to the mobile terminal 1 from which the request originated.

Although it is not shown in the drawings, the mobile terminal 1 has a GPS receiver for determining its current location as it moves, and GPS positioning is carried out for a prescribed period. The mobile terminal 1 outputs a request for display map information to the information distribution computer system of the data communication service center 3 if the display map information shown is insufficient as a result of GPS positioning. In addition, the storage means is provided in the information distribution computer system of the data communication service center for storing data such as road data (cartographic data), landmarks represented by various buildings, intersection names, road names, and the like on the maps. These data are updated when the most recent data are collected from information distribution computer systems 5 and 6 or the like which distribute maps via an Internet network 4.

Such types of communicative navigation systems and route search methods applied in information distribution servers are also disclosed in Japanese Laid-Open Patent Application No. 2001-165681 ("Patent Document 4"). The navigation system disclosed in Patent Document 4 is configured in such manner that guidance occurs when starting location and target location information is sent by a mobile navigation terminal to an information distribution server. Routes that suit the defined search parameters are searched from among the data regarding road networks and communications networks. Search conditions consist of ways of moving from the starting location to the target location, i.e., by walking, by riding an automotive vehicle, or going by train and on foot, any of one which may constitute a search condition for route searching.

The information distribution server assigns nodes to represent the positions of the nodal points and curvature points of the cartographic data roads (routes), designates links as routes connecting the nodes to one another, and has a database of the corresponding total cost information for each of the links (in terms of distance or required time). Thus, the information distribution server refers to the database and gradually searches the links leading from the starting location node to the target location node, and the resulting route guidance tracks and traverses nodes and links that provide link information at least cost, thereby providing the mobile navigation terminal with the shortest route. This type of route searching technique employs a method referred to as the label setting method or the Dijkstra method. Route searching methods that employ the Dijkstra method are also disclosed in Patent Document 4.

Background art of interest is also provided in the following documents.

WO 01/23835 A2 discloses a traffic monitoring system for monitoring traffic including a population of users bearing a multiplicity of mobile communication devices, and methods useful for monitoring traffic. The system includes a mobile communication network interface receiving, from at least one communication network serving the multiplicity of mobile communication devices, and storing, location information characterizing at least some of the multiplicity of mobile communication devices, and a traffic monitor operative to compute at least one traffic-characterizing parameter on the basis of the location information.

US patent application US 2003/045997 A1 discloses a communication type navigation apparatus which can communicate with a server device via a communication path. The navigation apparatus requests route search, and the server device executes route search to produce route information of a searched route. Then, the meshes necessary to travel along the searched route are determined, and the navigation apparatus obtains necessary mesh data from the server device. The navigation apparatus may request newer mesh data to the server device based on the updating information of the mesh data. By appropriately determining the mesh data to be and not to be downloaded from the server device, the communication cost necessary for obtaining the mesh data can be saved.

European patent application EP 1 069 547 A1 discloses a digital map data processing device generating an accurate road map and for navigation and control of traveling vehicles according to the generated road map. In the device, a map image processing station acquires image data of the ground surface through a satellite communication station, and an image processing section converts the image data into orthoimage data which is viewed substantially from directly above and free from distortion. A data extraction section extracts a skeleton map (road network data) formed of roads and related stereoscopic information according to the orthoimage data, a data conversion section calculates base road data from the skeleton map, and a map generation section overlays necessary attribute data to generate highly accurate digital orthomap data free from a distortion. The digital orthomap data is sent to a vehicle through a transmission section and used for navigation control and running control.

## SUMMARY

In the conventional navigation system disclosed in Patent Document 1, aerial photographs are stored as image data, and even cartographic data that is not directly displayed is required for route searching and therefore must also be stored. Accordingly, the amount of data stored by navigation systems that utilize only cartographic data greatly increases.

Moreover, in respect of communicative navigation systems in which routes or maps are displayed at the mobile navigation terminal (mobile phone) that receives cartographic data and route data originating from an information distribution server, the immediate surroundings of the current location can be easily recognized. Therefore, when such kind of system, which indicates the current location in the displayed image of an aerial photograph is adopted, as with the navigation system disclosed in Patent Document 1, it becomes desirable to minimize the volume of cartographic data and the like being communicated by and between the mobile navigation terminal and the data distribution server.

As described above, when route searching is performed using cartographic data, and the map and route guidance are displayed on the display screen of the mobile navigation terminal, there are methods for displaying cartographic data and route guides as an overlay on the aerial photographic image of the area in question in order to facilitate assessment of the buildings or surrounding environs by the user (Patent Document 1). On the other hand, with respect to communicative navigation systems comprising a mobile navigation terminal and information distribution server, when the system is configured in such manner that cartographic data, aerial photographic image data, and route guidance data are transmitted, the amount of data required to be transmitted between the mobile navigation terminal and the information distribution server increases, which in turn results in greater communication load as the number of mobile navigation terminal subscribers using such information distribution server increases.

The inventors carried out various investigations intended to resolve the above problems, as a result of which they conceptualized the present invention, which provides an information distribution server according to appended Claim 1, a mobile navigation terminal according to Claim 3, and a communicative navigation system according to Claim 5. Preferred features are set out in the remaining claims.

BRIEF DESCRIPTION OF THE DRAWINGS

Fig. 1 is a block diagram showing the configuration of the communicative navigation system according to the first embodiment of the present invention;
Fig. 2 is a schematic diagram illustrating the mesh data partitions;
Fig. 3 is a schematic diagram describing the sequence principle for dividing the mesh data into tertiary regional partitions;
Fig. 4 is a schematic view showing ¼-mesh mesh data containing the location 35 deg. 40 min 03 sec north latitude, 139°. 44 min 56 sec east longitude;
Fig. 5 is a diagram showing the ¼-mesh mesh data image of Fig. 4;
Fig. 6 is a diagram showing the configuration of the PNG format for producing aerial photographic image data;
Fig. 7 is a schematic diagram for illustrating the initiation point of display when displaying mesh data with the specific location appearing at the center of the display;
Fig. 8 is a diagram showing the mesh data code for adjacent mesh data;
Fig. 9 is a diagram showing an example of a route guide obtained by route searching;
Fig. 10 is a flow chart showing the processing sequence of the mobile navigation terminal when the mobile navigation terminal receives route guidance from the information distribution server, wherein Fig. 10A is the processing sequence when the mobile navigation terminal 30 sends the initial route guidance request to the information distribution server 20, and Fig. 10B is a flow chart showing the processing sequence carried out each time the current location of the mobile navigation terminal 30 is determined by the GPS processor 32 subsequent to the process of Fig. 10A;
Fig. 11 is a schematic diagram describing the route matching process;
Fig. 12 is a diagram showing the processing sequence for the information distribution server that processes the route search request coming from the mobile navigation terminal;
Fig. 13 is a diagram showing the general configuration of a conventional navigation system using aerial photographic images for display; and

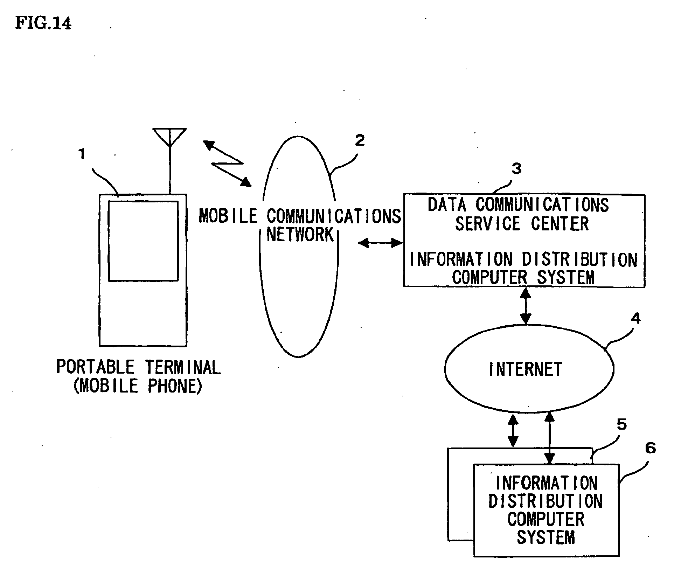

Fig. 14 is a diagram showing the configuration of a communicative navigation system using a portable telephone as a terminal.

DESCRIPTION OF PREFERRED EMBODIMENTS

Embodiments of the communicative navigation system and information distribution server, as well as the mobile navigation terminal according to the present invention will be described below with reference to the accompanying drawings.

There is described in the following an information distribution server, which is provided with a cartographic database and an aerial photographic image database, whereby the information distribution server searches routes based on map information, appends the searched route guidance data to the aerial photographic images, distributes the integrated data to the mobile navigation terminal, and performs a route matching process in which the current location as determined by the mobile navigation terminal is matched with an aerial photographic image of a route based on the route guidance data.

Specifically, an embodiment of the present invention described herein provides a portable navigation system whereby current location and route guidance can be displayed together on aerial photographic images on the mobile navigation terminal with low transmission volume, an information distribution server, and a mobile navigation terminal.

This can be accomplished by means of the configuration described below. Specifically, the communicative navigation system according to a first embodiment of the present invention comprises an information distribution server having a cartographic database for storing map data for route searching, and a mesh database whereby images produced from aerial photographs or satellite photographs are partitioned and stored in meshes for each prescribed region; and a mobile navigation terminal connected to the information distribution server via a network;

wherein the system specifically comprises a mobile navigation terminal having GPS processing means for determining a current location, matching processing means for matching a measured location with a route to determine the current location, a mesh data request processor for computing mesh data wherein a new distribution request for mesh data containing the current location is sent to the data distribution server, and an operating unit for inputting route search parameters; and which sends a request for distribution of the route search parameters and/or mesh data to the information distribution server;

wherein the information distribution server is equipped with a route search unit and mesh data distribution unit and searches routes using the cartographic database for route searching, and, when the route guidance requested for distribution is in the form of mesh data, adds the route guidance data to the mesh data and sends the integrated data to the mobile navigation terminal; and

wherein the mobile navigation terminal displays the route guidance information superimposed on the distributed mesh data.

In addition, in the communicative navigation system of the embodiment, the mesh data distribution unit writes and distributes route guidance data displayed on a mobile navigation terminal to an extended region of the distributed mesh data in distribution format to the mobile navigation terminal.

The information distribution server of the first embodiment comprises a server connected, via a network, to a mobile navigation terminal having a GPS processing means for determining a current location, a matching processing means for matching a measured location with a route to determine the current location, a mesh data request processor for computing a mesh data code representing mesh data, said code to be sent to the information distribution server, when a new distribution request for mesh data containing the current location is sent to the information distribution server, and an operating unit for inputting route search parameters; and where the mobile navigation terminal sends requests for distribution of route search parameters and mesh data as needed, to the information distribution server;

wherein the information distribution server specifically comprises a cartographic database for storing map data for route searching, a mesh database whereby images produced from aerial photographs or satellite photographs are partitioned and stored in meshes for each prescribed region, a route searching unit, and a mesh data distribution unit; wherein the mesh data distribution unit adds the distributed route guidance data to the mesh data and sends the integrated data to the mobile navigation terminal.

In a second embodiment of the invention, the mobile navigation terminal sends a mesh data code representing, at least, a starting location, target location, search conditions, and requested mesh data to the information distribution server, and the information distribution server searches for routes each time the mesh data code representing the starting location, target location, search conditions, and requested mesh data is received, and adds the route guidance data to mesh data when the route guidance requested for distribution is in the form of mesh data, and sends the integrated data to the mobile navigation terminal.

The information distribution server according to the second embodiment pertains to a server connected, via a network, to a mobile navigation terminal having GPS processing means for determining a current location, a matching processing means for matching a measured location with a route to determine the current location, a mesh data request processor for computing mesh data wherein a new distribution request for mesh data containing the current location is sent to the data distribution server, and an operating unit for inputting route search parameters; and where the mobile navigation terminal sends a mesh data code representing, at least, a starting location, target location, search conditions, and requested mesh data to the information distribution server;

wherein whenever the information distribution server conducts route searches, it receives the mesh data code representing the starting location, target location, search conditions and requested mesh data and adds the route guidance data to mesh data when the route guidance requested for distribution is contained in the mesh data, and sends the integrated data to the mobile navigation terminal.

In addition, the information distribution server according to either of these embodiments is such that the mesh data distribution unit thereof writes and distributes route guidance data displayed on a mobile navigation terminal to an extended region of the distributed mesh data in distribution format to the mobile navigation terminal.

Further, the mobile navigation terminal of the first embodiment can be connected, via a network, to an information distribution server which has a cartographic database for storing map data for route searching, a mesh database whereby images produced from aerial photographs or satellite photographs are partitioned and stored in meshes for each prescribed region, a route searching unit, and a mesh data distribution unit, wherein the mesh data distribution unit adds the distributed route guidance data displayed on the mobile navigation terminal to the mesh data distributed to the mobile navigation terminal;

wherein the mobile navigation terminal comprises GPS processing means for determining a current location, matching processing means for matching a measured location with a route to determine the current location, a mesh data request processor for computing mesh data wherein a new distribution request for mesh data containing the current location is sent to the data distribution server, and an operating unit for inputting route search parameters; and where the mobile navigation terminal sends the route search parameters and distribution requests for mesh data as needed to the information distribution server and displays the route guidance over the mesh data that has been distributed by the information distribution server.

In addition, the mobile navigation terminal according to the second embodiment can be connected, via a network, to an information distribution server which has a cartographic database for storing map data for route searching, a mesh database whereby images produced from aerial photographs or satellite photographs are partitioned and stored in meshes for each prescribed region, a route searching unit, and a mesh data distribution unit; wherein the information distribution server receives a mesh data code representing a starting location, target location, search conditions, and requested mesh data from the mobile navigation terminal every time searches are conducted; and in which the mesh data distribution unit adds the distributed route guidance data displayed on the mobile navigation terminal to the mesh data and sends the integrated data to the mobile navigation terminal;

wherein the mobile navigation terminal specifically comprises a GPS processing means for determining a current location, a matching processing means for matching a measured location with a route to determine the current location, a mesh data request processor for computing a mesh data code representing mesh data, said code to be sent to be information distribution server, whereby a new distribution request for mesh data containing the current location is sent to the information distribution server, and an operating unit for inputting route search parameters; and where the mobile navigation terminal sends the route search parameters and distribution requests for mesh data as needed to the information distribution server and displays the route guidance over the mesh data that has been distributed by the information distribution server.

Further, the mobile navigation terminal of the embodiment can be connected, via a network, to an information distribution server which has a cartographic database for storing map data for route searching, a mesh database whereby images produced from aerial photographs or satellite photographs are partitioned and stored in meshes for each prescribed region, a route searching unit, and a mesh data distribution unit; and in which the mesh data distribution unit writes and distributes route guidance data displayed on the mobile navigation terminal to an extended region of the distributed mesh data in distribution format to the mobile navigation terminal,

wherein the mobile navigation terminal comprises a GPS processing means for determining a current location, a matching processing means for matching a measured location with a route to determine the current location, a mesh data request processor for computing mesh data whereby a new distribution request for mesh data containing the current location is sent to the data distribution server, and an operating unit for inputting route search parameters; and where the mobile navigation terminal sends the route search parameters and distribution requests for mesh data as needed to the information distribution server and displays the route guide over the mesh data that has been distributed by the information distribution server.

According to the communicative navigation system of the first embodiment of the present invention, when the information distribution server searches routes based on a cartographic database and the searched route guidance passes through the mesh data requested by the mobile navigation terminal, the information distribution server adds the distributed route guidance data to the mesh data that is to be sent to the mobile navigation terminal. The mobile navigation terminal displays the route guidance over the mesh data (in the form of an aerial photographic image) by a route matching process covering the routes included in the aerial photographic images based on the route guidance data. Consequently, communication between the information distribution server and the mobile navigation terminal occurs only when the route guidance data is added to the mesh data, thereby allowing a reduction in network transmission load.

In addition, the aerial or satellite photographic images are displayed on the mobile navigation terminal, and the route guidance is displayed on the routes covered by the photographic images, so that the user can see the surroundings of the actual route such as the existence of infrastructures surrounding or located along the displayed route, thereby facilitating visual recognition of the route information.

Further, according to the communicative navigation system of the second embodiment of the present invention, the information distribution server performs route searching each time a mesh data code representing a starting location, target location, search parameters, and requested mesh data is received from the mobile navigation terminal, and when route guidance is present in the mesh data that has been requested for distribution, the route guidance data is added to the mesh data, and the integrated data is sent to the mobile navigation terminal. For this reason, the information distribution server does not need to store historical information regarding route searching for each mobile navigation terminal, and providing the service of information distribution service for a large number of mobile navigation terminals is thus facilitated.

Further, the communicative navigation system of an embodiment of the present invention involves the production of route guidance data in an extended region of the mesh data in distribution format, so that the route guidance data can be incorporated into the mesh data. It is thus possible to send route guidance data to the mobile navigation terminal simultaneously with mesh data distribution with no resulting increase in transmission load.

Further, the information distribution server has a cartographic database for storing map data for route searching, a mesh database whereby images produced from aerial photographs or satellite photographs are partitioned and stored in meshes for each prescribed region, a route search unit, and a mesh data distribution unit. The mesh data distribution unit adds the distributed route guidance data to the mesh data sent to the mobile navigation terminal, thus making it possible to propose an information distribution server that is a constituent element of the communicative navigation system.

Further, in the information distribution server of the second embodiment, the information distribution server searches for routes each time a mesh data code representing a starting location, target location, search conditions, and requested mesh data is received. When a route guide is present in the mesh data that has been requested for distribution, the route guidance data is added to the mesh data and the integrated data is sent to the mobile navigation terminal, thus making it possible to propose an information distribution server that is a constituent element of the communicative navigation system.

Further, the information distribution server writes route guidance data in an extended region of the mesh data distribution format, thereby making it possible to incorporate route guidance data into the mesh data, allowing the route guidance data to be sent to the mobile navigation terminal simultaneously with the distribution of mesh data. Accordingly, it is possible to offer an information distribution server in which undue increases in transmission load do not occur.

Further still, the mobile navigation terminal in the first embodiment has a GPS processing means for determining a current location, a matching processing means for matching a measured location with a route to determine the current location, a mesh data request processor for computing a mesh data code representing mesh data, said code to be sent to the information distribution server, wherein a new distribution request for mesh data containing the current location is sent to the data distribution server, and an operating unit for inputting route search parameters; sends a distribution request for the route search parameters and mesh data as needed to the information distribution server; and displays the route guidance over the mesh data that has been distributed from the information distribution server. Consequently, it is possible to offer a mobile navigation terminal that is a constituent element of the above communicative navigation system. In addition, since satellite photograph images or aerial photographic images are displayed in the mobile navigation terminal, and the route guidance is displayed over the photographic image of the routes, the user can view the surroundings of the actual route such as the existing infrastructure conditions along the route, thereby facilitating visual appreciation of the route information.

Further, the mobile navigation terminal in the second embodiment computes route guidance parameters and new mesh data requested for distribution by the information distribution server in connection with the mesh data containing the current location each time the GPS processing means conducts measurement; requests distribution of mesh data from the information distribution server as needed; and displays the mesh data and route guide in the display screen based on the mesh data and route guidance data distributed from the information distribution server. Consequently, a mobile navigation terminal can be provided that is a constituent element of the communicative navigation system according to the second embodiment. In addition, aerial photograph or satellite photographic images are displayed on this mobile navigation terminal. Because the route guidance is displayed over the photographic images of the routes, the user can view the surroundings of the actual route such as the existing infrastructure conditions along the route, thereby facilitating visual appreciation of the route information.

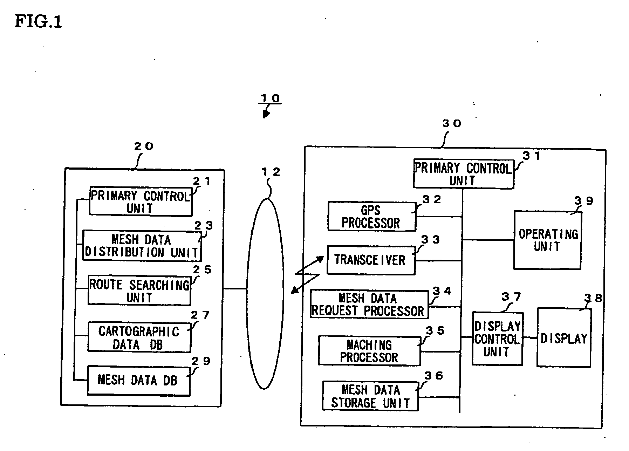

Fig. 1 is a block diagram showing the configuration of the communicative navigation system according to the first embodiment of the present invention. In Fig. 1, the communicative navigation system 10 has a configuration in which an information distribution server 20 and a mobile navigation terminal 30 having a mobile phone or the like as a constituent element are connected via a network 12 such as the Internet. Although the mobile navigation terminal 30 is shown as a single terminal for purposes of representation, the mobile navigation terminals actually used by subscribers to a navigation service provided by the information distribution server 30 are connected to the information distribution server 30 via the network 12 each time a service request is made.

The constituent elements of the information distribution server 20 include a primary control unit 21 having a microprocessor as a constituent element, a mesh data distribution unit 23, a route searching unit 25, a cartographic database (cartographic data DB) 27, and a mesh database (mesh data DB) 29. The primary control unit 21 controls the mesh data distribution unit 23, route searching unit 25, cartographic database (cartographic data DB) 27, and mesh database (mesh data DB) 29. As with ordinary computers, the server has RAM, ROM and other such storage devices, and also controls each of the above parts by means of a control program stored in the storage devices.

The cartographic data for route searching are stored in the cartographic data DB 27, and data produced by mapping images formed from aerial photographs or satellite photographs onto the mesh of prescribed regions (referred to as "mesh data" in the present invention) are stored in the mesh data DB 29. The mesh data will be described in detail below. The cartographic data DB 29, as disclosed in Patent Document 4, assigns nodes to represent the positions of the nodal points and curvature points of the cartographic data roads (routes), designates links as routes connecting the nodes to one another, and has a database of the corresponding total cost information for each of the links (in terms of distance or required time). The information distribution server 20 sequentially searches links from the starting location node to the target location node in reference to the cartographic data DB 29, and produces a route guide that tracks and traverses nodes and links with the least link cost information. As a result, the shortest route can be sent to the mobile navigation terminal 30. The route searching unit 25 is the component that carries out the above route search by means of the Dijkstra method as disclosed in Patent Document 4.

In conventional navigation devices, the route searching unit 25 carries out a route matching process that matches the route guide with the map routes (roads) based on cartographic data and route guidance data searched in correspondence with the cartographic data DB 27. The map and the route guide are then typically displayed on a display screen. The information distribution server 20 does not distribute cartographic data to the mobile navigation terminal 30, but mesh data for regions corresponding to the cartographic data to be distributed, i.e., images of aerial photographs or satellite photographs.

The information distribution server 20 distributes mesh data to the mobile navigation terminal 30 after incorporating the route guidance data searched by the route searching unit 25. The mobile navigation terminal 30 matches the measured current location with the aerial photographic route image based on the route guidance data, and displays the current location and the route guide on the mesh data routes (roads). In particular, the mesh data distribution unit 23 combines the distributed mesh data requested from the mobile navigation terminal 30 and the route guidance data when the resulting route guide obtained by the route searching unit 25 passes through the mesh data and sends the integrated data to the mobile navigation terminal 30.

Consequently, the information distribution server 20 need not distribute cartographic data, but only mesh data and route guidance data to the mobile navigation terminal 30, thereby allowing the volume of transmitted data to be reduced. For this reason, the load of communications taking place between the information distribution server 20 and the mobile navigation terminals does not increase.

Constituent elements of the mobile navigation terminal 30 include a primary control unit 31 having a microprocessor as a constituent element, a GPS processor 32, a transceiver/processor 33, a mesh data request processor 34, a matching processor 35, a mesh data storage unit 36, a display control unit 37, a display 38, and an operating unit 39. The main control part 31 controls each of these components, and has memory devices such as RAM and ROM, as with common computers. The control part controls the GPS processor 32, the transceiver/processor 33, the mesh data request processor 34, the matching processor 35, the mesh data storage unit 36, the display control unit 37, the display 38, and the operating unit 39 in accordance with a control program stored in the memory device.

The GPS processor 32 receives GPS satellite signals in the same manner as conventional navigation devices, and carries out processing in order to obtain current location data by measuring the position of the mobile navigation terminal 30. The transceiver/processor 33 sends information to the information distribution server 20, or receives information from the information distribution server 20. The mesh data request processor 34 computes a mesh data code representing the mesh data requested from the information distribution server, and sends it to the information distribution server 20 via the transceiver/processor processor 33. Details regarding mesh data requests will be described below. The distributed mesh data from the information distribution server 20 is stored in the mesh data storage unit 36, and is displayed on the display 38 under control of the display control unit 37.

The matching processor 35 matches the measured position determined by the GPS processor 32 with mesh data routes which is then specified as the current location. Specifically, in the mobile navigation terminal 30, when the route guide passes through a mesh data region (or is contained in such region) based on route guidance data and mesh data distributed by the information distribution server 20, the matching processor 35 carries out a process involving route matching of the measured location to a mesh data route, and thereafter the matched position is considered the current position and the mesh data, route guide and current location are displayed on the display 38 via the display control unit 37.

In the mobile navigation terminal 30, mesh data codes and other route search parameters for specifying at least, the starting location, target location, search conditions (e.g., ways of moving from the starting location to the target location, such as walking, by riding an automotive vehicle going by train and walking), as well as distribution requests for mesh data are inputted using an operating unit 39, and sent to the information distribution server 20. As described above, the route searching unit 25 of the information distribution server 20 then performs a route search based on the parameters of the route search request coming from the mobile navigation terminal 30. When the route guide obtained as a result of the search conducted by the route searching unit 25 pertains to a route within the mesh data of a map region corresponding to the mesh code requested for distribution, the mesh data distribution unit 23 adds the route guidance data to the mesh data and sends the integrated data to the mobile navigation terminal 30.

While the abovementioned series of processes is normally carried out by the information distribution server 20, when the mobile navigation terminal 30 has moved, mesh data for a new region is required, and thus a mesh data code representing the mesh data requested for distribution along with route search parameters such as the target location are sent to the information distribution server 20. The information distribution server 20 then repeats the above-mentioned series of processes once it receives a new request for route guidance from the mobile navigation terminal 30. Consequently, this series of processes is a cycle completed by the information distribution server 20 each time, and there is no need for it to be continually aware of the processes carried out by a specific single mobile navigation terminal 30. It is thus possible to provide path searching and information distribution services simultaneously to a large number of mobile navigation terminals 30. Specifically, it is not necessary for the information distribution server 20 to continually maintain and store the route searching processes that take place in individual mobile navigation terminals 30 or the route search conditions made by the individual mobile navigation terminals 30, thereby allowing such service to be provided to a large number of mobile navigation terminals.

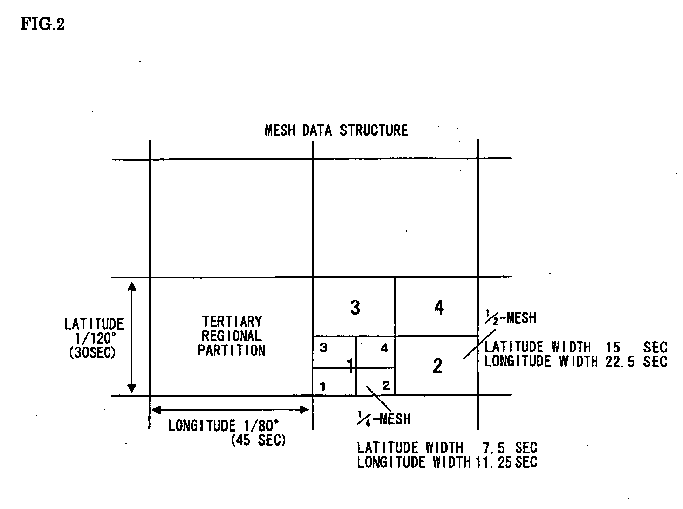

Image mesh data produced from the aerial photographs and satellite photographs will be explained hereafter. First, aerial photographic image data is produced as described below. Specifically, when the aerial photographic images are partitioned onto a mesh in accordance with Japanese Industrial Standard No. JIS-X0410, and are stored in the mesh data DB 29, the mesh is produced, for example, by creating partitions in regions of specific sizes according to longitude and latitude. Mesh sizes consist of primary regional partitions, secondary regional partitions constituted by dividing each of the primary regional partitions into eight, and tertiary regional partitions constituted by dividing each of the secondary regional partitions into ten. In the example shown in Fig. 2, the mesh data for the tertiary regional partitions are used as the basis for subdivision, and ½-(mesh mesh data are produced by additionally dividing the tertiary regional partitions into four. ¼-mesh mesh data are produced by dividing the ½ meshes into four, and are stored in the mesh data DB 29.

In Fig. 2, the latitudinal width of the tertiary regional partitions is at 1/120° (30 sec), and the longitudinal width thereof is at 1/80° (45 sec). The latitudinal width of the secondary regional partitions is thus at 15 sec, and the longitudinal width thereof is set at 22.5 sec. The latitudinal width of the primary regional partitions is at 7.5 sec, and the longitudinal width thereof is at 11.25 sec. Thus, with the mesh data produced in this manner, the aerial photographic images are partitioned using constant latitudinal and longitudinal widths and converted to images of prescribed pixel size, so the actual distances corresponding to the edges of the mesh slightly differ depending on the latitude. However, since scale variation between adjacent meshes is negligible, a natural map (in the form of an aerial photographic image) is produced by conjoining the meshes.

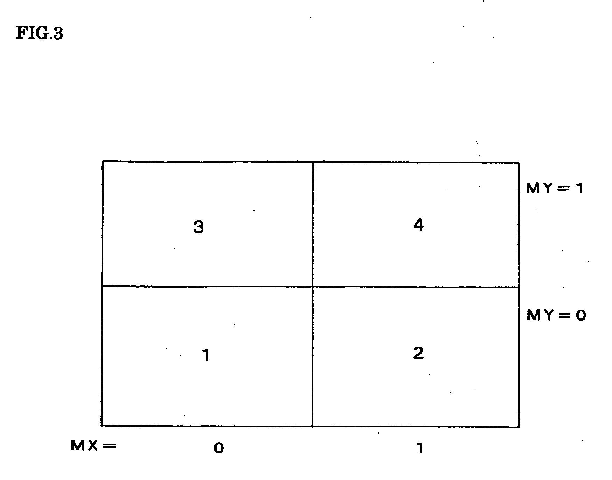

Mesh data produced in this manner is assigned a particular mesh data code for specifying mesh data pertaining to a specified regional partition within the mesh data produced. For example, the code 5339450922 is allotted to the mesh data 22 downward and to the right of the mesh data (1/4-mesh, refer to Fig. 2) as shown in Fig. 3. The method for using the latitude and longitude of a given point to determine the mesh data code for mesh data including another point is described below.

For example, the position of a building which is 35° 40 min 03 sec north latitude and 139° 44 min 56 sec east longitude is calculated for these locations in units of seconds, as follows.

35° 40 min 03 sec north latitude = 128403 sec
139° 44 min 56 sec east longitude = 503096 sec

The primary regional partition (JIS) that includes this location is delimited by a longitude of 2/3° (2400 sec) and latitude of 1° (3600 sec):

INT (128403/2400) = 53; REM 1203 sec
INT (503096/3600) - 100 = 39; REM 2696 sec,

where INT refers to the results represented by an integral number, and REM refers to the remainder. Thus, the eastern longitude side is established at -100. The results (INT) of this computation are defined in order to establish them as the mesh data code for a primary regional partition that includes the above-mentioned building position.

The secondary regional partition is then specified. A single secondary regional partition consists of a single primary regional partition vertically and horizontally divided into eight sections. Given that the position in the primary regional partition in terms of a latitudinal width is 300 sec and 450 sec in terms of longitudinal width, then

INT (1203/300) = 4; REM 3 sec
INT (2696/450) = 5; REM 446 sec

The secondary regional partition mesh data code is thus found to be 533945.

The tertiary regional partition is similarly specified. The tertiary regional partitions are partitions produced by dividing the secondary regional partitions vertically and horizontally into ten partitions. Given that a position in the secondary regional partition is found in terms of a latitudinal width of 30 sec and a longitudinal width of 45 sec., therefore:

INT (3/30) = 0; REM 3 sec
INT (446/45) = 9; REM 41 sec

The mesh data code of a tertiary regional partition is thus found to be 53394509.

From here, the ½-mesh is specified. The ½-mesh is a partition determined by dividing the tertiary partition vertically and horizontally into two partitions, and thus the latitudinal width is 15 sec, and the longitudinal width is 22.5 sec. As shown in Fig. 3, the order of the partitioned meshes runs counter-clockwise from the bottom left, and in terms of the sequence 1 to 4, the longitudinal direction MX is taken to be 0 and 1, and the latitudinal direction MY is taken as 0 and 1. Thus, the 1/2 -mesh data code can be computed, based on the ordering system of Fig. 3, as follows:

MY = INT (3/15) = 0; REM 3 sec
MX = INT (41/22.5) = 1; REM 18.5 sec

$$MX + 2 \times MY + 1 = 2$$

Thus, the mesh data code for the ½-mesh data is found to be 533945092.

In addition, the ¼-mesh is similarly specified. The ¼-mesh is determined by dividing the ½ mesh horizontally and vertically into two sections. Thus, the values are computed as:

MY = INT (3/7.5) = 0; REM 3 sec
MX = INT (18.5/11.25) = 1; REM 7.25 sec

$$MX + 2 \times MY + 1 = 2$$

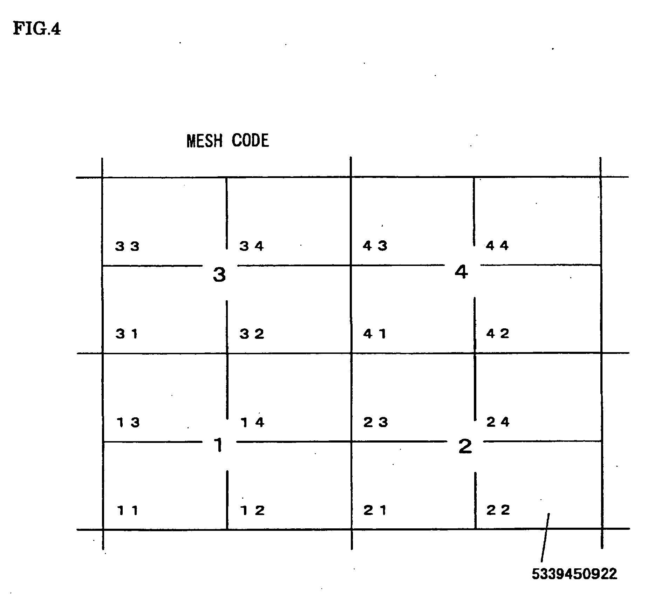

The mesh data code for the ¼-mesh is thus found to be 5339450922. Fig. 4 is a schematic diagram showing the position of the ¼-mesh mesh data including the point 35° 40 min 03 sec north latitude, 139° 44 min 56 sec east longitude, determined in the above-mentioned manner.

In the description presented below, the terms "mesh," "mesh data" and "mesh data code" refer to ¼-meshes.

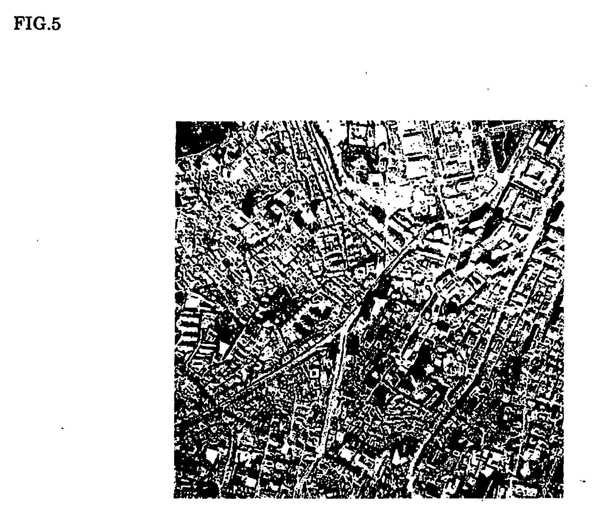

The aerial photographic image data will be explained hereafter. As shown in Fig. 5, the aerial photographic images of the mesh at ¼-mesh are produced by using portable network graphics ("PNG") with 200 vertical pixels and 240 horizontal pixels. All of the ¼-mesh images are unified in 200 vertical pixels and 240 horizontal pixels, and thus adjacent mesh data can be arranged to overlap or lie in tile form without gaps, as shown on the display 38.

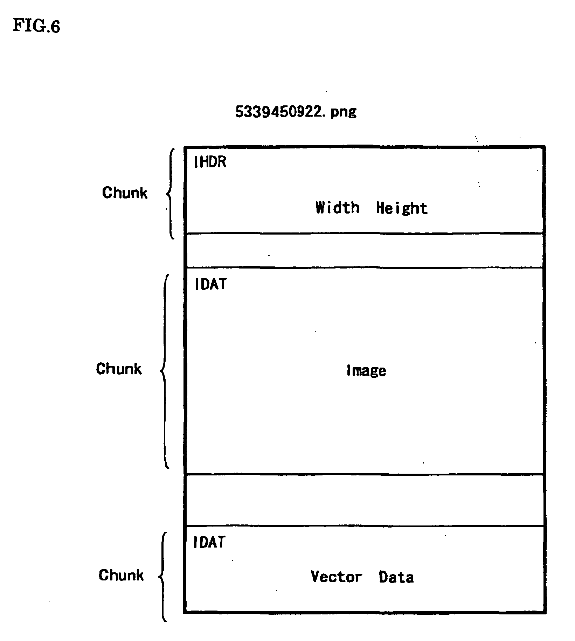

Fig. 6 is a diagram showing the configuration of the PNG format. In the PNG format shown in Fig. 6, the vertical and horizontal sizes of the images are inserted as parameters represented by width/height in the header region, and thus the mobile navigation terminal 30 can ascertain the display size from the PNG-format image data (corresponding to "mesh data"). In other words, the height of an image is 200 pixels and its width is 240 pixels. Consequently, a single mesh data unit contains the aerial photographic image as indicated in Fig. 5. The IDAT of the format of Fig. 6 is the data itself of the photographic image.

In addition, the PNG format also has an extended region tExt in which text data can be added (written) as desired. When the route guide searched by the route searching unit 25 is contained in mesh data (when the route guide passes through the mesh data), the data for the route guide are added (written) as vector data in the extended region tExt. In this manner, the mobile navigation terminal 30 receives the PNG format image data from the information distribution server 20, and thus the route guide can be obtained simultaneously with the aerial photographic image that is used instead of a map.

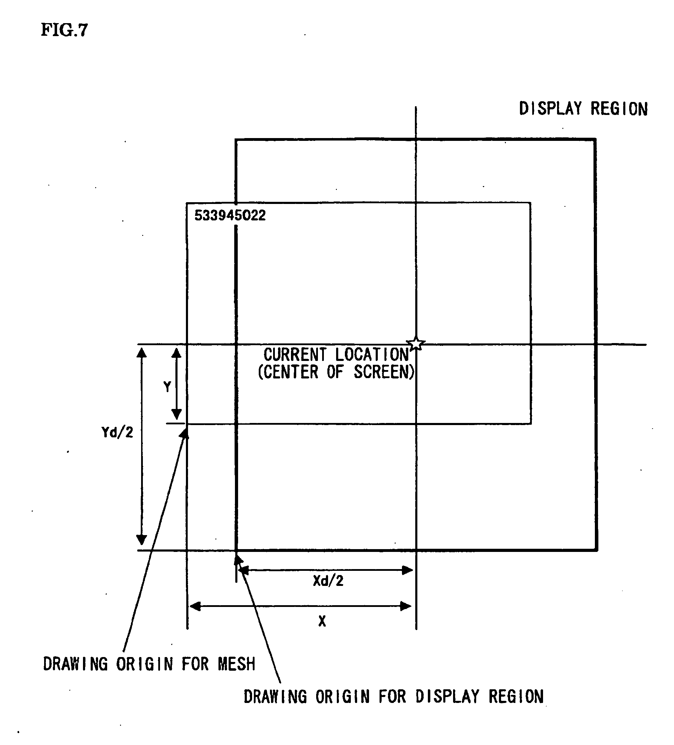

Next, in Fig. 7, a description is presented regarding the starting point for the display of the PNG format (mesh data) used for display, so that a certain point will be at the center of the display screen (display 38) in the mobile navigation terminal 30. As shown in Fig. 7, the display 38 of the mobile navigation terminal 30 has a display region with Yd and Xd vertical and horizontal pixels. The originating point is located at the left lower corner of the figure.

For example, when the position of a given point, i.e., 35° 40 min 03 sec north latitude, 139° 44 min 56 sec east longitude, is taken as the starting point (present location), the point is first displayed to be at the center of the screen. As shown above, the computed ¼-mesh data that corresponds to the mesh data code 5339450922 will be used for display. From the final remaining fraction out of determining this ¼-mesh mesh data code, the current location of the mobile navigation terminal 30 on the mesh data can be expressed in the pixel unit coordinates (X, Y).

$$\text{Specifically, (X,Y)} = ((7.25/11.25) \times \text{Width, } (3/7.5) \times \text{Height})$$

$$= ((7.25/11.25) \times 240, (3/7) \times 200)$$

$$= (154, 80)$$

The coordinates (154, 80) therefore represent the position of the starting location (current location) on the mesh. Because it is preferable for the ¼-mesh data corresponding to mesh data code 5339450922 to be displayed in such manner that the starting location is positioned at the center of the display screen, as shown in Fig. 7, it is desirable that the mesh data be drawn from the position ((Xd/2-X), (Yd/2-Y)), as shown in Fig. 7. In this case, since the drawing will sometimes occur outside the region of the corresponding display screen, it would be desirable for the display control unit 37 to control this type of drawing. For example, when the display screen is a QVGA (240 x 320) display region, the mesh data is drawn from the coordinates (X,Y) = (-34, 80).

While a single mesh data unit containing the current location can be written as described above, it is comparatively easy to determine whether the mesh data adjacent to the previously displayed mesh data will be shown on the rest of the surrounding display screen or not. First, the system checks whether the four corners of the mesh data previously displayed exist in respective display regions. If a certain number of corners do exist in the display region, then a determination is made whether the adjacent mesh should be displayed on the edge linking the corners. For example, as shown in Fig. 7, if two corners of the display region are present, then a determination is made whether the three mesh data adjacent to the three edges that connect to the two corners as well as the two mesh data that connect with the two corners are to be displayed.

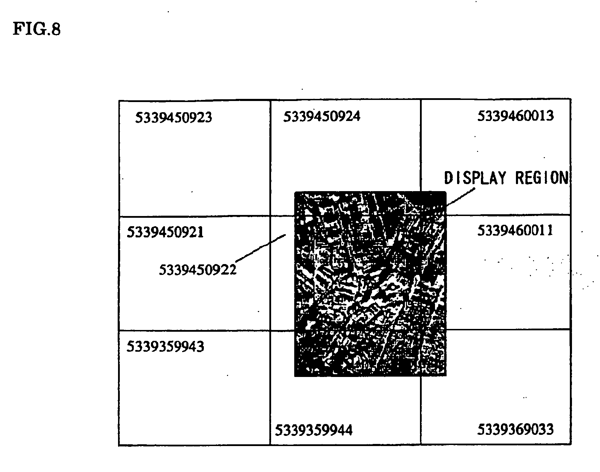

The mesh data code that defines the mesh data that is to be displayed, as previously described, conforms with a standard (as determined by JIS), and thus the mesh data code of the adjacent mesh data to be displayed can be readily determined without computing latitudes and longitudes. Specifically, in Fig. 7, because the top left and bottom right corners of the mesh data of mesh data code 5339450922 are present in the display region, as shown in Fig. 8, five mesh data are displayed, namely: those of adjacent mesh data codes 5339450924, 5339359944, and 5339460011 that connect with the two corners, and adjacent codes 5339460013 and 5339369033 that reside at an angle with respect to the two corners.

The operational sequence for route guidance will be discussed hereafter. A user operates an operating unit 39 of the mobile navigation terminal 30, and inputs information regarding a starting location, a target location, and the search conditions (for indicating that walking is the method of movement to be adopted) which will serve as search parameters. This information is then sent to the information distribution server 20. During the initial route inspection request made to the information distribution server 20, the mobile navigation terminal 30 sends the mesh data containing the starting point and the eight mesh data adjacent to this mesh data to the information distribution server 20. The mesh data requested for distribution is computed and specified as described in reference to Fig. 8 in advance in the mesh data request processor 34. Meanwhile, when the information distribution server 20 sends information such as the mesh data and the required time for guidance to the mobile navigation terminal 30, the user indicates agreement, sends the input to the information distribution server 20, and navigation commences.

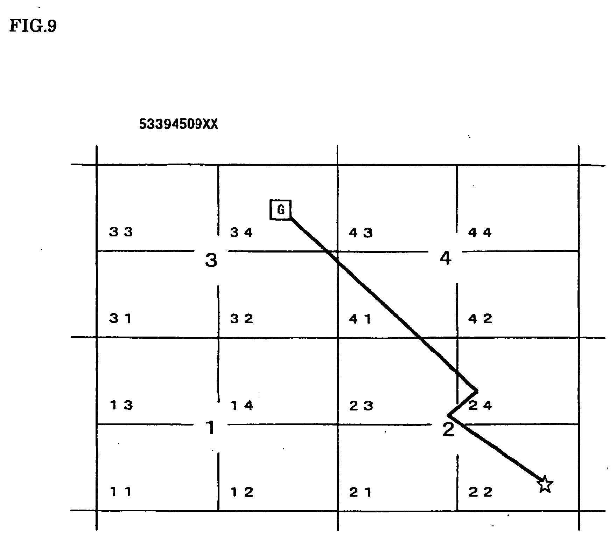

In the information distribution server 20, the route searching unit 25 searches routes in accordance with the route searching parameters received from the information distribution server 20. The route search conducted in the route searching unit 25 employs the Dijkstra method described above in reference to the cartographic data DB 27. Fig. 9 is a diagram showing an example of a route guide obtained as a result of this route search. In Fig. 9, the route guide obtained as a result of the route search is indicated by a bold line, and such is the route that runs from the site indicated by a star in the ¼-mesh data (22) to the site indicated by G in the ¼-mesh data (34).

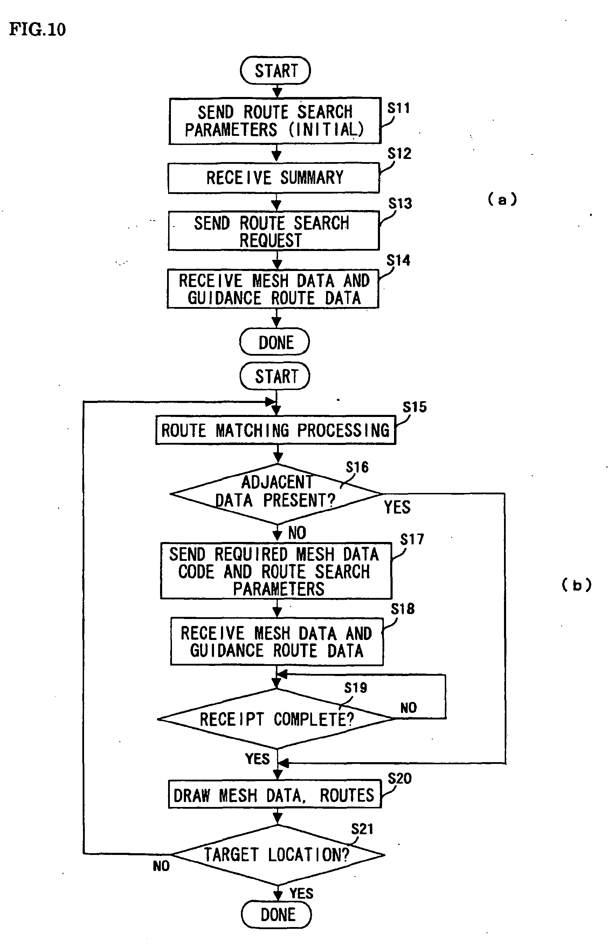

Fig. 10 is a flow chart showing the processing sequence of the mobile navigation terminal 30 in the operating sequence for the route guidance described above. Fig. 10A is the initial processing sequence that takes place when the route guidance request is initially made by the mobile navigation terminal 30 to the information distribution server 20, while Fig. 10B is a flowchart showing the processing sequence that is carried out each time measurement of the current location of the mobile navigation terminal 30 is made by the GPS processor 32 subsequent to the process of Fig. 10A.

As shown in Fig. 10A, when the mobile navigation terminal 30 receives route guidance from the information distribution server 20, first, the user of the mobile navigation terminal 30 inputs information that will serve as route searching conditions such as the starting location, target location, and other search conditions (for indicating that walking is the method of movement to be adopted) using an operating unit 39, and the information is sent to the information distribution server 20 in step S11. When the current location is obtained by GPS, the mobile navigation terminal 30 uses the current location data (latitude and longitude) measured by the GPS processor 32 as the starting location.

Meanwhile, in step S12, the information distribution server 20 sends a summary or the like of the route search results (yielding the total route distance, required time, or the like), and when the user makes an input indicating that the displayed route has been accepted, the process proceeds to step S13 and subsequent steps.

When, in step S13, the route search request, the mesh data containing the starting location, and the eight mesh data adjacent to this mesh data have been computed and specified, and the distribution request for these mesh data has been sent to the information distribution server 20, then navigation is initiated. The information distribution server 20 then searches routes based on the data for the route search parameters, and the mesh data and the route guidance data resulting from the route search are sent to the mobile navigation terminal 30. The mobile navigation terminal 30 then receives the mesh data and the route guidance data in step S14. The mesh data that has been distributed at this time, as shown in Fig. 8, is the mesh data at the center of the display and the eight mesh data adjacent to this mesh data. The data configuration of the mesh data through which the searched route guide passes is described in Fig. 6. Specifically, in the mesh data through which the route guide passes, the route guidance data is written as vector data in the extended region of the mesh data constructed according to PNG format. The nine mesh data distributed by the information distribution server 20 are stored in the mesh data storage unit 36.

When the above-mentioned mesh data is received by the information distribution server 20, the mobile navigation terminal 30 carries out the procedure of the flowchart of Fig. 10B. This process, as described above, is carried out each time the current location of the mobile navigation terminal 30 is determined by the GPS processor 32. First, in step S15, the mobile navigation terminal 30 carries out a route matching process in which the matching processor 35 matches the current location (results of measurement by the GPS processor 32) with the mesh data route for the route guidance data contained in the mesh data that has been received from the information distribution server 20. The route matching process itself is a process that has been carried out in the past in many navigation devices.

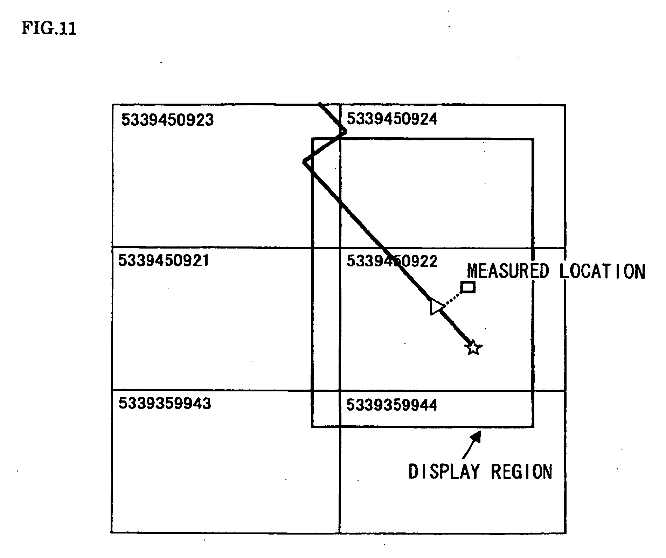

At this point, a brief description will be presented regarding the route matching process in reference to Fig. 11. In Fig. 11, the thick box denotes the display region of the display 38, and the slanted thick line denotes the route guide. In the figure, the point indicated as "measured location" is the present location of the mobile navigation terminal 30 measured by the GPS processor 32. The results of measurement are not necessarily restricted to routes on the map, as the GPS system itself may introduce error. Thus, a process for correcting the measured location to correspond with the route is required. This process is referred to as route matching. Specifically, route matching is a process in which a line is drawn perpendicular to the route that is closest to the measured location on the map 11, and the route intersection closest to this measured location is considered as the current location of the mobile navigation terminal 30.

Next, the mobile navigation terminal 30, based on the current location obtained by route matching in step S15, determines whether or not the mesh data request processor 34 has finished distributing the mesh data surrounding the mesh data that is at the center of the display in step S16 (completion of storage in the mesh data storage unit 36). It is expected that all of the mesh data will have been distributed soon after the initial route search request has been made, and thus the determination in step S16 is "yes." The process of step S22 then immediately commences, and a process in which the mesh data and route guide are drawn on the display 38 is carried out in step S22. The drawing process has already been described in Fig. 7.

When the mobile navigation terminal 30 moves, the adjacent mesh data of the distributed mesh data that has been stored in the mesh data storage unit 36 becomes insufficient, so the determination in step S16 becomes "no," and the mobile navigation terminal 30, in step S17, sends the mesh data code for the required mesh data and information regarding route searching parameters to the information distribution server 20. When the information is received, the information distribution server searches for routes based on the starting location, target location, and route search conditions (indicating walking in this case) in the same manner as with the initial route searching request. The mesh data and the route guidance data added to the mesh data when the searched route guide is contained in the mesh data are thus distributed to the mobile navigation terminal 30.

When reception of the route guidance data and the mesh data from the information distribution server 20 begins in step S18, the mobile navigation terminal 30 determines whether or not receipt is complete in step S19. If receipt is not yet complete, then reception is continued. If receipt is complete, then the mesh data and route guide are drawn on the display 38 in step S20. At this time, the mesh data containing the route guide contains the route guidance data in vector form in the extended region of the PNG format, and the route guide is thus written over the mesh data (aerial photographic image). Thus, processing of the first positioning is completed. It is then determined whether the target location has been reached in step S21, and, if the target location has been reached, the process returns to step S15, and the above series of processes is carried out each time GPS positioning occurs. If the target location has been reached, then the process terminates.

In the communicative navigation system according to the present embodiment, the information distribution server 20 only sends mesh data produced from aerial photographic images to the mobile navigation terminal 30, or, when the route guide passes through the mesh data, route guidance data together with the mesh data. Consequently, an increase in transmission load does not occur. In addition, in contrast to map matching, the objects to which the measured position is matched are only routes. Accordingly, the matching process can be carried out with little processing at the mobile navigation terminal 30. Further, when there is a discrepancy between the results of positioning and the displayed mesh data, the mobile navigation terminal 30 sends the route search parameter data to the information distribution server 20, and the information distribution server 20, based on this information, carries out a processing sequence running from route searching to distribution of mesh data and route guidance data each time. Consequently, the information distribution server 20 can process route searching and route establishment without being aware of the movements of each mobile navigation terminal 30, thereby allowing servicing of numerous mobile navigation terminals 30.

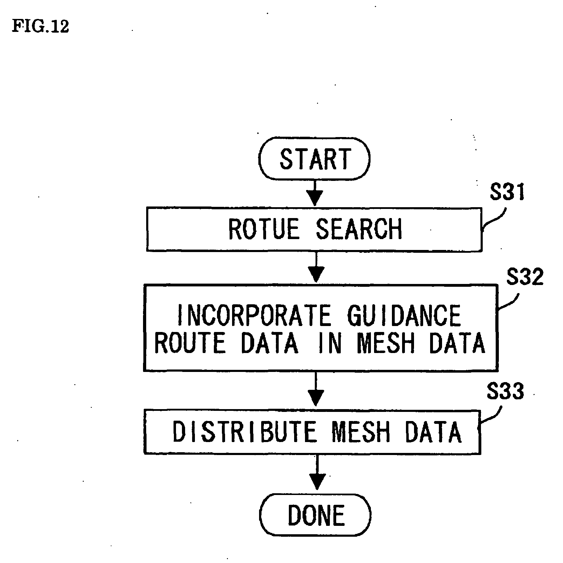

On the other hand, the processing sequence of the information distribution server 20 is as shown in the flow chart of Fig. 12. Specifically, when the information distribution server 20 receives a route search inquiry from the mobile navigation terminal 30 as described above, the processing sequence of the flow chart of Fig. 12 is enacted. As described above, the route search parameters such as the repetitions, starting location, target location, and search conditions (transportation means) are sent from the mobile navigation terminal 30 each time there is a route search request. For this reason, the route searching unit 25 of the information distribution server 20 (refer to Fig. 1) can search for the same route guides at any time in step S31. Consequently, the information distribution server 20 has no particular need to preserve historical records such as prior route search results for specific mobile navigation terminals 30.

In step S32, the mesh data distribution unit 23 of the information distribution server 20 writes the route guidance data as vector data in the extended region of the mesh data produced in PNG format when the route guide is contained in the mesh data, thereby producing distribution data. Specifically, as described in Fig. 6, the PNG format for the mesh data has an extended region tExt in which it is possible to add text data if desired. When the route guide searched in the route searching unit 25 is contained in the mesh data (when the route guide passes through the mesh data), the route guidance data is added (written) as vector data in the extended region tExt.

Next, in step S33, the mesh data containing the added route guidance data is distributed (sent) to the mobile navigation terminal 30, and the process is completed. At this point, processing of the information distribution server 20 is completed, so if there is a route search request from another mobile navigation terminal 30, processing for another mobile navigation terminal 30 from which the request came can immediately ensue. This system of processing is an extremely important factor in terms of allowing the information distribution server 20 to continually provide service to a large number of mobile navigation terminals 30.

Position matching of aerial photographic image data with route guidance data depends on the precision of data in the information distribution server 20. Even if there should be a slight shift in coordinates, because the route is superimposed on the aerial photographic image data (mesh data) in the communicative navigation system according to the present invention, the intended route guidance can be sufficiently conveyed to the user even if there is a slight shift in the display of the route guide, without any practical impediment. In particular, because the current location measured by GPS is matched with the route, the map will not seem unnatural or difficult to understand for the user.

While aerial photographs or satellite photographs can produce data over broad regions in a comparatively short time period, it is necessary to plot points such as roads and landmarks based on aerial photographs or satellite photographs for electronic maps used in ordinary route searching, and these operations greatly increase the amount of work. In particular, it has also been necessary to map sections that are not used in route searching as roads, such as landmarks and major structures. With the communicative navigation system according to the present embodiment, however, the map data that is stored in the cartographic data DB 29 of the information distribution server 20 is used only for route searching. For this reason, cartographic data specified for route searching using only road data as data may be used, and cartographic data may be produced without requiring a large number of man-hours, as in the past. In particular, because only road data is required for use, a navigation system can be easily provided for regions for which electronic maps are not yet available.

**Claims**

1. An information distribution server (20) configured for connecting, via a network (12), to a mobile navigation terminal (30) having a GPS processing means (32) configured for determining a current location, a matching processing means (35) configured for matching a measured location with a route to determine the current location, a mesh data request processor (34) configured for computing a mesh data code representing mesh data, said code to be sent to the information distribution server, when a new distribution request for mesh data containing the current location is sent to the information distribution server, and an operating unit (39) configured for inputting route search parameters, the mobile navigation terminal (30) being operable to send requests for distribution of route search parameters and/or said mesh data to the information distribution server (20), the information distribution server (20) comprising:

    a cartographic database (27) configured for storing map data for route searching;
    a mesh database (29) configured for storing images produced from aerial photographs or satellite photographs partitioned in meshes for each prescribed region;
    a route searching unit (25); and

a mesh data distribution unit (23) arranged to write route guidance data as vector data to an extended region of the mesh data in a distribution format to generate integrated route guidance data and mesh data, and send the integrated data to the mobile navigation terminal (30).

2. An information distribution server (20) according to claim 1, wherein:

the mobile navigation terminal (30) is arranged to send a mesh data code for representing, at least, a starting location, target location, search conditions, and requested mesh data to the information distribution server (20); and

the information distribution server (20) is arranged to search routes each time it receives the mesh data code, generate the integrated data when the route guide is contained in the mesh data that has been requested for distribution, and send the integrated data to the mobile navigation terminal (30).

3. A mobile navigation terminal (30) configured for connecting, via a network (12), to an information distribution server (20) which has a cartographic database (27) configured for storing map data for route searching, a mesh database (29) configured for storing image produced from aerial photographs or satellite photographs partitioned in meshes for each prescribed region, a route searching unit (25), and a mesh data distribution unit (23) arranged to write route guidance data as vector data to an extended region of the mesh data in a distribution format to generate integrated route guidance data and mesh data and send the integrated data to the mobile navigation terminal, the mobile navigation terminal (30) comprising:

a GPS processing means (32) configured for determining a current location;
a matching processing means (35) configured for matching a measured location with a route to determine the current location
a mesh data request processor (34) configured for computing a mesh data code representing mesh data, said code to be sent to the information distribution server, when a new distribution request for mesh data containing the current location is sent to the data distribution server (20); and
an operating unit (39) configured for inputting route search parameters;
wherein the mobile navigation terminal (30) is arranged to send the route search parameters and distribution requests for mesh data as needed to the information distribution server (20), and display the route guide over the mesh data that has been distributed in the integrated data by the information distribution server (20).

4. A mobile navigation terminal (30) according to claim 3, wherein:

the mobile navigation terminal (30) is arranged to send a mesh data code representing, at least, a starting location, target location, search conditions, and requested mesh data to the information distribution server (20); and
the information distribution server (20) is arranged to search routes each time the mesh data code is received from the mobile navigation terminal (30) and
the mesh data distribution unit (23) is arranged to add the distributed route guide data displayed on the mobile navigation terminal (30) to the mesh data distributed to the mobile navigation terminal (30)

5. A communicative navigation system (10) comprising:

an information distribution server (20) according to claim 1; and
a mobile navigation terminal (30) according to claim 3 connected to the information distribution server (20) via a network (12).

6. A communicative navigation system (10) comprising:

an information distribution server (20) according to claim 2; and
a mobile navigation terminal (30) according to claim 4 connected to the information distribution server (20) via a network (12).

**Patentansprüche**

1. Informationsverteilungsserver (20), der konfiguriert ist zum Verbinden, über ein Netz (12), mit einem mobilen Navigationsendgerät (30), das ein GPS-Verarbeitungsmittel (32) aufweist, das konfiguriert ist zum Bestimmen einer gegenwärtigen Position, ein Abgleichverarbeitungsmittel (35), das konfiguriert ist zum Abgleichen einer gemessenen Position mit einer Route zum Bestimmen der gegenwärtigen Position, einen Mesh-Daten-Anforderungsprozessor (34), der konfiguriert ist zum Berechnen eines Mesh-Daten-Codes, der Mesh-Daten darstellt, wobei der Code an den Informationsverteilungsserver gesendet wird, wenn eine neue Verteilungsanforderung für Mesh-Daten, die die gegenwärtige Position enthält, an den Informationsverteilungsserver gesendet wird, und eine Betriebseinheit (39), die konfiguriert ist zum Eingeben von Routensuchparametern, wobei das mobile Navigationsendgerät (30) betreibbar ist zum Senden von Anforderungen zum Verteilen von Routensuchparametern und/oder der Mesh-Daten an den Informationsverteilungsserver (20), wobei der Informationsverteilungsserver (20) umfasst:

> eine kartographische Datenbank (27), die konfiguriert ist zum Speichern von Kartendaten für eine Routensuche;
> eine Mesh-Datenbank (29), die konfiguriert ist zum Speichern von Bildern, die aus Luftfotografien oder Satellitenfotografien erzeugt wurden, die in Meshes für jede vorgeschriebene Region unterteilt sind;
> eine Routensucheinheit (25); und
> eine Mesh-Daten-Verteilungseinheit (23), die ausgebildet ist zum Schreiben von Routenführungsdaten als Vektordaten für eine erweiterte Region der Mesh-Daten in einem Verteilungsformat, um integrierte Routenführungsdaten und Mesh-Daten zu erzeugen, und zum Senden der integrierten Daten an das mobile Navigationsendgerät (30).

2. Informationsverteilungsserver (20) nach Anspruch 1, wobei:

> das mobile Navigationsendgerät (30) ausgebildet ist zum Senden eines Mesh-Daten-Codes zum Darstellen von zumindest einer Startposition, einer Zielposition, Suchbedingungen und an dem Informationsverteilungsserver (20) angeforderter Mesh-Daten; und
> der Informationsverteilungsserver (20) ausgebildet ist zum Suchen nach Routen, jedes Mal dann, wenn dieser den Mesh-Daten-Code empfängt, zum Erzeugen der integrierten Daten, wenn die Routenführung in den Mesh-Daten enthalten ist, die zur Verteilung angefordert wurden, und zum Senden der integrierten Daten an das mobile Navigationsendgerät (30).

3. Mobiles Navigationsendgerät (30), das konfiguriert ist zum Verbinden, über ein Netz (12), mit einem Informationsverteilungsserver (20), der eine kartografische Datenbank (27) aufweist, die konfiguriert ist zum Speichern von Kartendaten für eine Routensuche, eine Mesh-Datenbank (29), die konfiguriert ist zum Speichern von Bildern, die aus Luftfotografien oder Satellitenfotografien erzeugt wurden, die in Meshes für jede vorgeschriebene Region unterteilt sind, eine Routensucheinheit (25), und eine Mesh-Daten-Verteilungseinheit (23), die ausgebildet ist zum Schreiben von Routenführungsdaten als Vektordaten für eine erweiterte Region der Mesh-Daten in einem Verteilungsformat, um integrierte Routenführungsdaten und Mesh-Daten zu erzeugen, und die integrierten Daten an das mobile Navigationsendgerät zu senden, wobei das mobile Navigationsendgerät (30) umfasst:

> ein GPS-Verarbeitungsmittel (32), das konfiguriert ist zum Bestimmen einer gegenwärtigen Position;
> ein Abgleichverarbeitungsmittel (35), das konfiguriert ist für einen Abgleich einer gemessenen Position mit einer Route, zum Bestimmen der gegenwärtigen Position;
> einen Mesh-Daten-Anforderungsprozessor (34), der konfiguriert ist zum Berechnen eines Mesh-Daten-Codes, der Mesh-Daten darstellt, wobei der Code an den Informationsverteilungsserver gesendet wird, wenn eine neue Verteilungsanforderung nach Mesh-Daten, die die gegenwärtige Position enthalten, an den Datenverteilungsserver (20) gesendet wird; und
> eine Betriebseinheit (39), die konfiguriert ist zum Eingeben von Routensuchparametern;
> wobei das mobile Navigationsendgerät (30) ausgebildet ist zum Senden der Routensuchparameter und von Verteilungsanforderungen für Mesh-Daten, bei Bedarf, an den Informationsverteilungsserver (20), und zum Anzeigen der Routenführung über die Mesh-Daten, die in den integrierten Daten durch den Informationsverteilungsserver (20) verteilt wurden.

4. Mobiles Navigationsendgerät (30) nach Anspruch 3, wobei:

> das mobile Navigationsendgerät (30) ausgebildet ist zum Senden eines Mesh-Daten-Codes, der zumindest eine Startposition, eine Zielposition, Suchbedingungen und an dem Informationsverteilungsserver (20) angeforderte Mesh-Daten darstellt; und
> der Informationsverteilungsserver (20) ausgebildet ist zum Suchen nach Routen, jedes Mal dann, wenn der Mesh-Daten-Code von dem mobilen Navigationsendgerät (30) empfangen wird, und

die Mesh-Daten-Verteilungseinheit (23) ausgebildet ist zum Hinzufügen der verteilten Routenführungsdaten, die auf dem mobilen Navigationsendgerät (30) angezeigt werden, zu den an das mobile Navigationsendgerät (30) verteilten Mesh-Daten.

**5.** Kommunikatives Navigationssystem (10), umfassend:

einen Informationsverteilungsserver (20) nach Anspruch 1; und
ein mobiles Navigationsendgerät (30) nach Anspruch 3, das über ein Netz (12) mit dem Informationsverteilungsserver (20) verbunden ist.

**6.** Kommunikatives Navigationssystem (10), umfassend:

einen Informationsverteilungsserver (20) nach Anspruch 2; und
ein mobiles Navigationsendgerät (30) nach Anspruch 4, das über ein Netz (12) mit dem Informationsverteilungsserver (20) verbunden ist.

## Revendications

**1.** Serveur de distribution d'informations (20) configuré pour se connecter, via un réseau (12), à un terminal de navigation mobile (30) ayant un moyen de traitement GPS (32) configuré pour déterminer un emplacement actuel, un moyen de traitement de correspondance (35) configuré pour faire correspondre un emplacement mesuré avec une route afin de déterminer l'emplacement actuel, un processeur de demande de données de maillage (34) configuré pour calculer un code de données de maillage représentant des données de maillage, ledit code devant être envoyé au serveur de distribution d'informations, lorsqu'une nouvelle demande de distribution de données de maillage contenant l'emplacement actuel est envoyée au serveur de distribution d'informations, et une unité d'actionnement (39) configurée pour introduire des paramètres de recherche de route, le terminal de navigation mobile (30) étant capable d'envoyer des demandes de distribution de paramètres de recherche de route et/ou desdites données de maillage au serveur de distribution d'informations (20), le serveur de distribution d'informations (20) comprenant :

une base de données cartographiques (27) configurée pour stocker des données cartographiques pour la recherche de route ;
une base de données de maillage (29) configurée pour stocker des images produites à partir des prises de vue aériennes ou des photos satellites divisées en maillages pour chaque région prescrite ;
une unité de recherche de route (25) ; et
une unité de distribution de données de maillage (23) agencée pour écrire des données de guidage routier comme étant des données vectorielles à une région étendue des données de maillage dans un format de distribution afin de générer des données de guidage routier intégrées et des données de maillage, et pour envoyer les données intégrées au terminal de navigation mobile (30).

**2.** Serveur de distribution d'informations (20) selon la revendication 1, dans lequel :

le terminal de navigation mobile (30) est agencé pour envoyer un code de données de maillage pour représenter, au moins, un emplacement de départ, un emplacement cible, des conditions de recherche, et des données de maillage demandées au serveur de distribution d'informations (20) ; et
le serveur de distribution d'informations (20) est agencé pour rechercher des routes à chaque fois qu'il reçoit le code de données de maillage, pour générer les données intégrées lorsque le guidage routier est contenu dans les données de maillage qui ont été demandées pour la distribution, et pour envoyer les données intégrées au terminal de navigation mobile (30).

**3.** Terminal de navigation mobile (30) configuré pour se connecter, via un réseau (12), à un serveur de distribution d'informations (20) ayant une base de données cartographiques (27) configurée pour stocker des données cartographiques pour la recherche de route, une base de données de maillage (29) configurée pour stocker des images produites à partir des prises de vue aériennes ou des photos satellites divisées en maillages pour chaque région prescrite, une unité de recherche de route (25), et une unité de distribution de données de maillage (23) agencée pour écrire des données de guidage routier comme étant des données vectorielles à une région étendue des données de maillage dans un format de distribution afin de générer des données de guidage routier intégrées et des données de maillage, et pour envoyer les données intégrées au terminal de navigation mobile, le terminal de navigation mobile (30) comprenant :

un moyen de traitement GPS (32) configuré pour déterminer un emplacement actuel ;

un moyen de traitement de correspondance (35) configuré pour faire correspondance un emplacement mesuré avec une route afin de déterminer l'emplacement actuel ;

un processeur de demande de données de maillage (34) configuré pour calculer un code de données de maillage représentant des données de maillage, ledit code devant être envoyé au serveur de distribution d'informations, lorsqu'une nouvelle demande de distribution de données de maillage contenant l'emplacement actuel est envoyée au serveur de distribution de données (20) ; et

une unité d'actionnement (39) configurée pour introduire des paramètres de recherche de route ;

où le terminal de navigation mobile (30) est agencé pour envoyer les paramètres de recherche de route et les demandes de distribution de données de maillage, selon le besoin, au serveur de distribution d'informations (20), et pour afficher le guidage routier sur les données de maillage qui ont été distribuées dans les données intégrées par le serveur de distribution d'informations (20).

4. Terminal de navigation mobile (30) selon la revendication 3, dans lequel :

le terminal de navigation mobile (30) est agencé pour envoyer un code de données de maillage représentant, au moins, un emplacement de départ, un emplacement cible, des conditions de recherche, et des données de maillage demandées au serveur de distribution d'informations (20) ; et

le serveur de distribution d'informations (20) est agencé pour rechercher des routes à chaque fois que le code de données de maillage est reçu à partir du terminal de navigation mobile (30) et

l'unité de distribution de données de maillage (23) est agencée pour ajouter les données de guidage routier distribuées affichées sur le terminal de navigation mobile (30) aux données de maillage distribuées au terminal de navigation mobile (30).

5. Système de navigation et de communication (10) comprenant :

un serveur de distribution d'informations (20) selon la revendication 1 ; et

un terminal de navigation mobile (30) selon la revendication 3 connecté au serveur de distribution d'informations (20) via un réseau (12).

6. Système de navigation et de communication (10) comprenant :

un serveur de distribution d'informations (20) selon la revendication 2 ; et

un terminal de navigation mobile (30) selon la revendication 4 connecté au serveur de distribution d'informations (20) via un réseau (12).

FIG.1

FIG.2

MESH DATA STRUCTURE

LATITUDE
1/120°
(30SEC)

TERTIARY
REGIONAL
PARTITION

3 | 4

3 | 4

1 | 2

1

2

½-MESH

LATITUDE WIDTH 15 SEC
LONGITUDE WIDTH 22.5 SEC

¼-MESH

LONGITUDE 1/80°
(45 SEC)

LATITUDE WIDTH 7.5 SEC
LONGITUDE WIDTH 11.25 SEC

FIG.3

FIG.4

MESH CODE

5339450922

FIG.5

## FIG.6

5339450922. png

FIG.7

DISPLAY REGION

533945022

CURRENT LOCATION
(CENTER OF SCREEN)

Y

Yd/2

Xd/2

X

DRAWING ORIGIN FOR MESH

DRAWING ORIGIN FOR DISPLAY REGION

FIG.8

| 5339450923 | 5339450924 | 5339460013 |
|---|---|---|
| 5339450921 | | 5339460011 |
| 5339359943 | 5339359944 | 5339369033 |

DISPLAY REGION

5339450922

FIG.9

53394509XX

FIG.10

START

SEND ROUTE SEARCH
PARAMETERS (INITIAL) — S11

RECEIVE SUMMARY — S12

SEND ROUTE SEARCH
REQUEST — S13

RECEIVE MESH DATA AND
GUIDANCE ROUTE DATA — S14

DONE

(a)

START

ROUTE MATCHING PROCESSING — S15

ADJACENT DATA PRESENT? — S16
YES
NO

SEND REQUIRED MESH DATA
CODE AND ROUTE SEARCH
PARAMETERS — S17

RECEIVE MESH DATA AND
GUIDANCE ROUTE DATA — S18

RECEIPT COMPLETE? — S19
NO
YES

DRAW MESH DATA, ROUTES — S20

TARGET LOCATION? — S21
NO
YES

DONE

(b)

FIG.11

| 5339450923 | 5339450924 |
| 5339450921 | 5339450922 MEASURED LOCATION |
| 5339359943 | 5339359944 |

DISPLAY REGION

FIG.12

```
        ┌─────────────┐
        │    START    │
        └──────┬──────┘
               │              S31
        ┌──────▼──────────────┐
        │    ROTUE  SEARCH    │
        └──────┬──────────────┘
               │              S32
        ┌──────▼──────────────┐
        │ INCORPORATE GUIDANCE│
        │ ROUTE DATA IN MESH DATA│
        └──────┬──────────────┘
               │              S33
        ┌──────▼──────────────┐
        │ DISTRIBUTE MESH DATA│
        └──────┬──────────────┘
               │
        ┌──────▼──────┐
        │    DONE     │
        └─────────────┘
```

FIG.13

(a)

(b)

FIG.14

PORTABLE TERMINAL
(MOBILE PHONE)

MOBILE COMMUNICATIONS
NETWORK

DATA COMMUNICATIONS
SERVICE CENTER

INFORMATION DISTRIBUTION
COMPUTER SYSTEM

INTERNET

INFORMATION
DISTRIBUTION
COMPUTER
SYSTEM

**EP 1 757 904 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5113343 A
- JP 2003214860 A
- JP 2001298765 A
- JP 2001165681 A
- WO 0123835 A2
- US 2003045997 A1
- EP 1069547 A1